# EUROPEAN PATENT APPLICATION

(11) **EP 4 625 246 A1**
(43) Date of publication of application: **01.10.2025**
(21) Application number: 24166698.1
(22) Date of filing: 27.03.2024
(51) Int. Cl.: G06K 7/10

(54) **RFID READER AND METHOD OF GENERATING A MACHINE-READABLE CODE FOR CONFIGURING THE SAME**

(71) Applicant: Technology Solutions (UK) Limited, Loughborough, Leicestershire, LE11 3GE (GB)
(72) Inventor: JUDGE, Andrew, Loughborough, LE11 3GE (GB); PAINTER, Brian, Loughborough, LE11 3GE (GB); STONE, Robin, Loughborough, LE11 3GE (GB)
(74) Representative: Kramer Barske Schmidtchen Patentanwälte PartG mbB

(57) **Abstract**

An RFID reader (10) may be configured using a machine-readable code (22), for example, a QR code. The machine-readable code (22) includes at least one command (32) for executing a configuration program (28) residing on the RFID reader (10). By supplying appropriate parameters, a controller (24) of RFID reader (10) can run the configuration program (28) in order to appropriately configure any desired operating parameter of the RFID reader (10), for example, a communication mode to be used when communicating to external devices, user feedback, a start-up sequence, and the like.

## Description

### Technical Field

The present disclosure generally relates to the field of radiofrequency identification (RFID) devices, in particular, to an RFID reader and a method of generating a machine-readable code for configuring an RFID reader, for example, to change an operation mode of the same.

### Background

RFID readers are used in a wide variety of fields in order to perform a large number of different tasks. For example, in retail, mobile RFID readers are deployed to contactlessly read RFID tags to manage inventory, perform stock checking, merchandise planning, price and promotion management, etc. The RFID readers can be used to read data from and write data to one or more RFID tags, and can be connected to other computing devices such as mobile phones, desktop computers and the like in order to further process data that is read from the RFID tags. Other industry applications for RFID readers include, for example, agriculture, construction, government, health care, leisure and hospitality, public transport, transport and logistics, and warehouse and distribution.

Many RFID readers can be used in a variety of different manners, depending on their configuration. For example, user feedback upon performing a reading operation, a frequency or manner of performing a reading operation, and many other properties of the RFID reader can be configured in accordance with a user's preference or the specific application for which the RFID reader is used.

WO 2023/215172 A1 describes systems and methods for scanner configuration using advanced data formatting.

The present disclosure is directed, at least in part, to improving or overcoming one or more aspects of prior systems.

### Summary of the Disclosure

According to one aspect, an RFID reader has a housing, an RFID communication circuit accommodated in the housing and configured to perform RFID communications with at least one RFID tag disposed in a read range of the RFID communication circuit, and an image capturing device provided on the housing and configured to capture an image of a machine-readable code disposed in a field of view of the image capturing device. The RFID reader further has a controller accommodated in the housing, and a memory storing at least one configuration program for configuring at least one operating parameter of the RFID reader. The controller is configured to decode the machine-readable code captured by the image capturing device to determine the presence or absence of a unique identifier indicating that the machine-readable code includes at least one command for executing the at least one configuration program, and, if the unique identifier is present, extract the at least one command from the decoded machine-readable code and execute the at least one configuration program specified by the at least one command to configure the at least one operating parameter of the RFID reader in accordance with the at least one command. In some embodiments, if the unique identifier is not present in the machine-readable code, the controller is configured to process, store or forward the decoded information to an external device in a normal manner.

In another aspect, a method of generating a machine-readable code for configuring an RFID reader, for example, an RFID reader in accordance with the first aspect, includes the steps of selecting at least one command for executing at least one configuration program stored in the memory of the RFID reader, optionally together with one or more parameters, providing a unique identifier, encoding the unique identifier and the at least one command, optionally together with the one or more parameters, in a machine-readable code, and at least one of: printing the machine-readable code, displaying the machine-readable code on a display device, and electronically transmitting the machine-readable code to at least one recipient, for example, by email.

In yet another aspect, a method of configuring an RFID reader includes the steps of capturing an image of a machine-readable code using an image capturing device of the RFID reader, decoding the machine-readable code captured by the image capturing device to determine the presence or absence of a unique identifier indicating that the machine-readable code includes at least one command for executing at least one configuration program stored in a memory of the RFID reader, and, if the unique identifier is present, extracting the at least one command from the decoded machine-readable code and executing the at least one configuration program specified by the at least one command to configure at least one operating parameter of the RFID reader in accordance with the at least one command.

Other features and aspects of this disclosure will be apparent from the following description and the accompanying drawings.

### Brief Description of the Drawings

Fig. 1 shows a perspective view of an exemplary RFID reader in accordance with the present disclosure,
Fig. 2 shows a schematic overview of a system including the exemplary RFID reader in accordance with the present disclosure,
Fig. 3 shows several examples of machine-readable codes for configuring the RFID reader in accordance with the present disclosure, and
Fig. 4 shows another exemplary machine-readable code for configuring the RFID reader in accordance with the present disclosure.

### Detailed Description

The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of protection. Rather, the scope of protection shall be defined by the appended claims.

The present disclosure is based at least in part on the realization that it may be difficult and/or cumbersome for customers to appropriately configure RFID readers in the desired or required manner, for example, by connecting the RFID readers to a host device such as a mobile or desktop computer. In particular, when a large number of RFID readers are to be configured in the field, this may require considerable time and effort.

Further, while it may be conceivable to use the RFID communication capabilities of the RFID reader to wirelessly configure the RFID reader, it has been realized that this is technically challenging, in particular during operation of the RFID reader, when a large number of different RFID tags may be present in the vicinity of the RFID reader, such that it may be difficult to recognize the RFID tag that is to be used for configuring the RFID reader, and configure the RFID reader accordingly.

It has been realized that the above disadvantages can be overcome by providing a machine-readable code that can be read by an RFID reader, and that results in that the RFID reader is configured appropriately. Some RFID readers may either include a device for reading machine-readable codes such as barcodes, or may be capable of being provided with such a device. An RFID reader having such a device for reading machine-readable codes can then be used to scan a machine-readable code such as a 1D or 2D barcode having a proprietary format, decode the barcode, and configure the RFID reader based on the contents of the decoded barcode.

It has been realized that a particularly advantageous and simple configuration can be achieved by encoding American Standard Code for Information Interchange (ASCII) protocol commands, for example, in a 2D machine-readable code such as a quick-response (QR) code. The ASCII commands can be executed by a processor of the RFID reader, i.e., an appropriate configuration program or module on the RFID reader can be executed in accordance with the command. For example, QR codes are widely used to encode information such as a uniform resource locator (URL) which, upon decoding by an appropriate engine, can result in accessing a web page specified by the URL. It has been realized that the proprietary ASCII command can have a format that is very similar to the format of a URL in a QR code, such that the machine-readable code for configuring the RFID reader can be easily generated using existing tools, or by modifying the known tools for generating such codes in a straightforward manner. Here, a unique format of the command is used to assure that the RFID reader is not inadvertently reconfigured by scanning other machine-readable codes. It will be appreciated that ASCII is only an example, and any other appropriate protocol can be used to specify the commands to be executed by the RFID reader.

The machine-readable code may include a unique identifier indicating that the machine-readable code includes at least one command for executing at least one configuration program. The unique identifier may have any appropriate form, as long as it can be recognized by a controller of the RFID reader after decoding the machine-readable code. In some embodiments, the unique identifier may include a predetermined sequence of ASCII or other characters. For example, a predetermined sequence of characters or numbers may indicate that the next portion of the decoded machine-readable code is a command for executing at least one configuration program. In some embodiments, the unique identifier may include at least part of a uniform resource identifier (URI).

The present disclosure is also based on the realization that the generation of machine-readable codes for configuring the RFID readers allows for easily distributing the same to customers, because said codes can simply be forwarded to the customers, for example, by email or by printing the same, for example, in a manual of the RFID reader. This further facilitates the configuration of the RFID reader by the end user. In some embodiments, the codes may also be dynamically generated using an appropriate software running, for example, on a smartphone or a tablet or desktop computer associated with the end user.

The present disclosure is also based at least in part on the realization that, using the ASCII or other protocol commands disclosed herein, a sequence of commands can be encoded, for example, in a single machine-readable code. Accordingly, a more complex configuration of the RFID reader, i.e., executing a script or the like, can be easily achieved by scanning the machine-readable code. As such, the machine-readable code can be used to "input" a command sequence that would normally be input into the RFID reader by means of, for example, a keyboard connected to a host computer to which the RFID reader is connected.

Finally, it has been realized that the machine-readable code disclosed herein can be used, in particular, to set the communication mode that is used by the RFID reader for communicating with external devices such as mobile or desktop computers. This is particularly advantageous when switching from a use of the RFID reader as an HID device to a different communication mode, and vice versa. In particular, in cases where the RFID readers are in a communication mode in which no commands can be input to the same via the host device, the command for switching the communication mode, for example, from an HID mode to another mode evidently cannot be input via the host device. On the other hand, such a switching of communication modes be easily be performed by scanning the corresponding machine-readable code using the RFID reader. In other embodiments, the machine-readable code may also configure the RFID communications performed by the RFID reader. In this respect, it should be appreciated that the expression "configuring at least one operating parameter of the RFID reader" as used herein should be interpreted broadly as referring to a change in the operation of the RFID reader, for example, activating or performing an RFID scan or other functions of the RFID reader in accordance with the command.

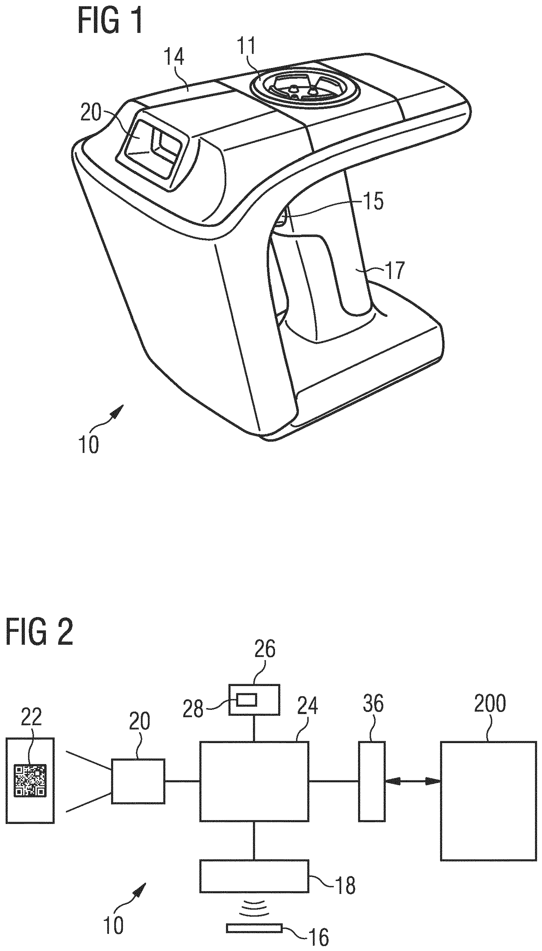

Fig. 1 shows a perspective view of an exemplary RFID reader 10 in accordance with the present disclosure. As shown in Fig. 1, RFID reader 10 has a housing 14, for example, including a handle 17 that can be gripped by a user of RFID reader 10 in order to use the same. Handle 17 may have a trigger 15, which can be operated by the user to initiate an RFID scan. In other embodiments, however, it will be appreciated that RFID scans can be initiated in a different manner, for example, based on RFID reader 10 being turned on, at certain time intervals, and the like. RFID reader 10 has an RFID communication circuit 18 accommodated in housing 14 and configured to perform RFID communications with at least one RFID tag 16 disposed in a read range of RFID communication circuit 18 (see Fig. 2). It will be appreciated that RFID communication circuit 18 includes an RFID antenna, an RFID chip and the like (not shown) in order to perform RFID communications. However, the details of operating an RFID reader in order to perform reading and writing operations on RFID tags are well-known, such that a detailed description will be omitted.

As shown in Fig. 1, RFID reader 10 also has an image capturing device 20 provided on housing 14. Image capturing device 20 is configured to capture an image of a machine-readable code disposed in a field of view of image capturing device 20. Here, image capturing device 20 may have any known configuration, for example, as a camera including an image sensor having a certain resolution, optionally in combination with an indicator light for illuminating an area of the field of view that is captured by image capturing device 20. As the use of appropriate image capturing devices and sensors for acquiring images of, in particular, machine-readable codes such as 1D or 2D barcodes is well-known, the details thereof will not be discussed herein. The further processing of images captured by image capturing device 20 will be described in the following.

In some embodiments, RFID reader 10 may include a connector 11, which may provide an interface for connecting, for example, a mobile phone or a tablet computer, in order to visualize information relating to the data that is read or written by RFID reader 10, or operate RFID reader 10 by receiving corresponding inputs via the mobile phone or tablet computer.

Fig. 2 shows a schematic overview of a system including RFID reader 10. As shown in Fig. 2, RFID reader 10 has RFID communication circuit 18 configured to perform RFID communications with at least one RFID tag 16 disposed in a read range of RFID communication circuit 18. Here, it will be appreciated that RFID reader 10 may perform RFID communications in any known manner, in particular, using different frequency ranges and read ranges, as appropriate. For example, RFID reader 10 may be configured to perform ultra high frequency (UHF) communications, with read and write ranges of up to several meters. However, it will be appreciated that RFID reader 10 is not limited to this example, and any appropriate RFID communications can be performed by the same. Likewise, it will be appreciated that the application in which RFID reader 10 is used is not limited to any particular application, and can be any application such as retail, transport and logistics, and warehouse and distribution as mentioned above.

As shown in Fig. 2, RFID reader 10 further has a controller 24 accommodated in housing 14, and a memory 26 storing at least one configuration program 28 for configuring at least one operating parameter of RFID reader 10. Here, it will be appreciated that controller 24 may be any known control device that is commonly used in electronic devices such as RFID readers, including, for example, a microcontroller, a central processing device (CPU), a programmable logic circuit, and the like. Further, memory 26 may have any appropriate configuration, for example, as a random-access memory (RAM), a read-only memory (ROM), flash memory, solid-state memory or the like, and may be rewritable. The at least one configuration program 28 is a program that is executable by controller 24, for example, an operating system program or routine included in an operating system of RFID reader 10, or a binary executable that can be executed by controller 24 by specifying the path of the same, i.e., the name of the executable and its location, for example, in a directory structure that is present on RFID reader 10.

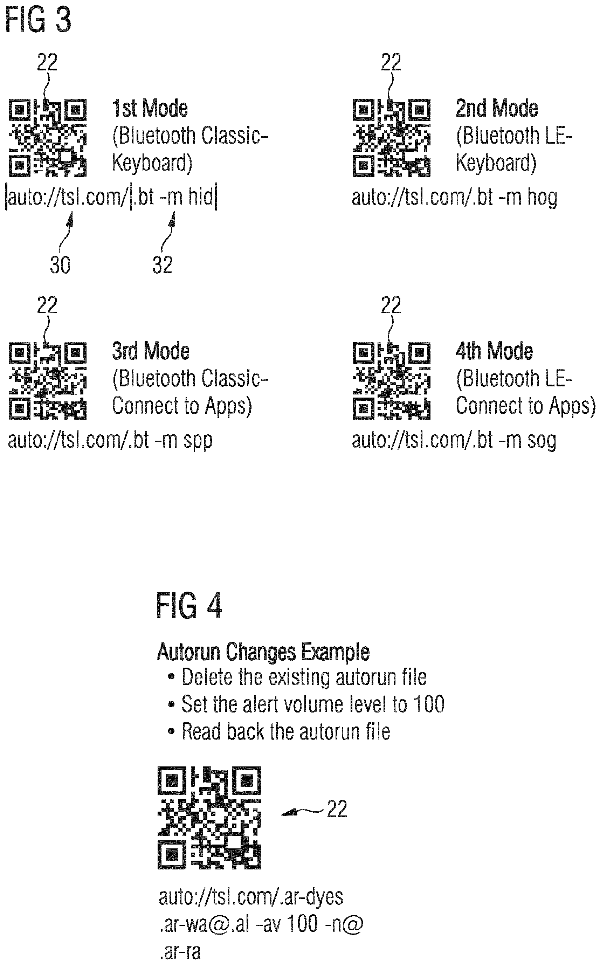

Controller 24 is configured to decode machine-readable code 22 captured by image capturing device 20 to determine the presence or absence of a unique identifier 30 (see Fig. 3) indicating that machine-readable code 22 includes at least one command 32 for executing the at least one configuration program 28. Here, it will be appreciated that controller 24 includes appropriate software for processing the image that is captured by image capturing device 20 to recognize and decode machine-readable code 22. Such programs are well-known, such that no details will be discussed herein. In one example, a barcode engine provided on RFID reader 10 can be configured to read any one of known machine-readable codes, in particular, 1D or 2D barcodes such as a QR code, a Micro QR code, Portable Document Format (PDF) 417, Micro PDF417, Composite, Reduced Space Symbology (RSS), Code 39, Datamatrix, Aztec, or MaxiCode Postal Codes. The information extracted by decoding machine-readable code 22 can be further processed by controller 24 in an appropriate manner, as will be discussed in more detail below.

Unique identifier 30 may have any appropriate form, as long as it can be recognized by controller 24 after decoding machine-readable code 22. In some embodiments, unique identifier 30 may include a predetermined sequence of ASCII characters. For example, a predetermined sequence of ASCII characters or numbers may indicate that the next portion of the decoded machine-readable code 22 is a command 32 for executing at least one configuration program 28. It will be appreciated that ASCII is only an example, and any other appropriate character encoding can be used, if desired, such as 16-bit Unicode Transformation Format (UTF-16) or the like.

In some embodiments, unique identifier 30 may include at least part of a uniform resource identifier (URI). The general format of a URI is well-known to the skilled person, such that a detailed description will be omitted. A specific example for such a URI is shown in Figs. 3 and 4, and will be described in more detail in the following. In simple terms, the URI includes a so-called scheme, which serves as a keyword, followed by a colon, optionally followed by two slashes. The two slashes may be followed by a path, which may consist of a sequence of path segments separated by a slash. In the examples that are shown in Figs. 3 and 4, the URI that is used is "auto://tsl.com/". However, it will be appreciated that any other appropriate URI can be used instead to indicate that at least one command for executing the at least one configuration program 28 follows. Preferably, at least the scheme is unique insofar as it is distinguishable from commonly used schemes in barcodes such as, for example, "http" for indicating an internet address, or the like.

In some embodiments, the URI may specify a path that identifies the at least one configuration program 28, i.e., it may map to a file system path of the operating system running on RFID reader 10, i.e., indicate the path or directory in which the binary of the at least one configuration program 28 is located.

The at least one command 32 may be an ASCII or other protocol command including a name of the at least one configuration program 28 to be executed. In the example that is shown in Fig. 3, for example, the name of the at least one configuration program 28 may be ".bt", which may be a program for setting a Bluetooth communication mode to be used by RFID reader 10. Of course, it will be appreciated that the example shown in Fig. 3 is only one of a large number of possible names that can be used for the at least one configuration program 28. Preferably, however, the name should be short and only include a few characters, such that more than one command or configuration program can be specified by machine-readable code 22. This will be further described in the following.

If unique identifier 30 is present, controller 24 is configured to extract the at least one command from the decoded machine-readable code 22 and execute the at least one configuration program 28 specified by the at least one command 32 to configure the at least one operating parameter of RFID reader 10 in accordance with the at least one command 32. In the example shown in Fig. 3, the at least one command 32 is executed by controller 24 to set the Bluetooth communication mode of RFID reader 10, for example, to one of the exemplary four modes that are indicated in Fig. 3.

Here, as shown in Fig. 3, it will be appreciated that generally the at least one command 32 may include at least one parameter for the at least one configuration program 28 specifying how to configure the at least one operating parameter. In the example shown in Fig. 3, the at least one parameter includes the option "-m", followed by the indication of the Bluetooth mode to be set. However, it will be appreciated that also several parameters may be included in at least one command 32, to further specify how the at least one configuration program 28 is to be executed in order to configure RFID reader 10.

As shown in Fig. 4, machine-readable code 22 may include a plurality of commands 32 to be executed by controller 24. In the example shown in Fig. 4, the program ".ar" may be executed three times with different parameters. The commands may be separated by a prescribed character, for example, a blank space, such that controller 24 can recognize that different commands are present. Of course, in other examples, the plurality of commands 32 may specify the names of different configuration programs 28 to be executed.

In the example shown in Fig. 4, it can also be seen that a configuration file stored in memory 26 and including a plurality of commands to be executed, for example, when RFID reader 10 is turned on or reset, or an RFID scan is initiated, may be created or modified. For example, such an "autorun file" could be deleted, or a specific entry in the configuration file could be added or edited (the portion that is sandwiched by the characters "@" in the example shown in Fig. 4).

As initially mentioned, with the structure of machine-readable code 22 disclosed herein, a complex sequence of commands, i.e., a script, can be executed by controller 24. Here, it will be appreciated that a plurality of commands included in machine-readable code 22 may be executed by controller 24 in sequence, i.e., in the order they appear in the decoded machine-readable code 22. In other cases, however, in particular on processors capable of the same, said commands also may be executed in parallel, or in a different order.

Although Fig. 3 shows the example in which a Bluetooth communication mode of RFID reader 10 is set by at least one command 32, it will be appreciated that, generally, RFID reader 10 may have any appropriate communication interface 36 (see Fig. 2) for communicating with an external data processing device 200 (for example, a desktop computer, a mobile computer, or a smartphone) using a plurality of different available communication modes. In some embodiments, the at least one operating parameter that is set may indicate a communication mode to be used for communicating with external data processing device 200. This is particularly advantageous when communication interface 36 is a wireless communication interface, in particular, Bluetooth, as previously described. However, it will be appreciated that communication interface 36 may also be a wired communication interface, where the communication mode that is to be used can also be set in an appropriate manner. In one example, RFID reader 10 may move between different Bluetooth networks associated with different zones. Upon entering a zone, an associated machine-readable code may be scanned, and RFID reader 10 may connect to a host device specified by the code.

It will be appreciated that the examples given above relating to the communication mode to be used by RFID reader 10 are not limiting, and that any operating parameter of RFID reader 10 can be configured in the above-described manner. For example, the at least one configuration program 28 may configure the RFID communications performed by RFID communication circuit 18. For example, the time intervals at which RFID reader 10 performs an interrogation of RFID tags present in a vicinity of the same, the manner in which the received information is processed, the manner in which data is written to the RFID tags, and the like may be appropriately configured by executing appropriate configuration programs. For example, an RIFD tag performing a measurement of moisture or temperature could be installed at a location, and machine-readable code 22 could be provided adj acent to the RFID tag. Machine-readable code 22 may include commands for scanning this particular RFID tag instead of, for example, performing a generic scan for all devices within read range. In other examples, RFID reader 10 may be used on a shop floor in retail. A customer may ask for a specific article, and machine-readable code 22 may be dynamically generated to scan/find a particular RIFD tag associated with the specific article.

In yet another example, a manner in which user feedback is provided, for example, whether RFID reader 10 vibrates upon reading data from an RFID tag, whether one or more illumination devices are turned on upon detection of an RFID tag, whether a sound is emitted, and the like, can also be appropriately configured using machine-readable code 22 specifying an appropriate configuration program 28 and the corresponding parameters.

### Industrial Applicability

With the above-explained configuration, an RFID reader 10 can be easily configured in the field by scanning an optically readable code such as a 1D or 2D barcode, which indicates a configuration program to be executed, optionally together with one or more parameters for executing said program. In this manner, it is not necessary to connect to a host computer via a wireless or wired connection in order to perform the configuration of RFID reader 10.

An appropriately configured machine-readable code 22 for configuring RFID reader 10 may be generated by the following method:

In a first step, at least one command 32 for executing at least one configuration program 28 stored in memory 26 of RFID reader 10 may be selected, optionally together with one or more parameters. For example, an administrator or employee of the manufacturer of RFID reader 10 or a user of the same may use a host computer to select the at least one command 32 and, optionally, the one or more parameters, as if they were directly programming RFID reader 10, and may then encode the command and the optional parameters in machine-readable code 22 in an appropriate manner. In particular, if a known code such as a QR code is used, appropriate software is widely available, and machine-readable code 22 can be generated in a straightforward manner, without having to code proprietary programs for generating machine-readable code 22. Of course, it will be appreciated that, if it is desired not to reveal, in particular, the manner in which the configuration of RFID reader 10 is performed (i.e., the names of the configuration programs, the syntax to be used to execute the same, etc.), a proprietary code may be used as well. Known barcodes such as the QR codes shown in the figures are only an example, and other codes, for example, alphanumeric sequences of characters and the like, could be used. Optionally, the information in machine-readable code 22 may also be encrypted, for example, using a key that can only be used by authorized devices in order to decode the information. Such encryption methods are well-known, such that no details will be discussed herein.

In the next step of the method, a unique identifier 30 is provided. Here, the unique identifier may be the URI mentioned above, or may be any other appropriate identifier, such as a prescribed sequence of characters or numbers.

Finally, the unique identifier and the at least one command 32, optionally together with the one or more parameters, are encoded in machine-readable code 22, and machine-readable code 22 can be distributed by either printing the same, for example, in a manual of RFID reader 10, or electronically transmitting machine-readable code 22 to at least one recipient, for example, by email. Machine-readable code 22 can be displayed on a display of a device such as a mobile phone or a tablet computer of the recipient or the user generating the same, and can again be easily scanned by RFID reader 10 in order to configure the same.

Terms such as "about", "around", "approximately", or "substantially" as used herein when referring to a measurable value such as a parameter, an amount, a temporal duration, and the like, are meant to encompass variations of ±10% or less, preferably ±5% or less, more preferably ±1% or less, and still more preferably ±0.1% or less of and from the specified value, insofar as such variations are appropriate to perform in the disclosed invention. It is to be understood that the value to which the modifier "about" refers is itself also specifically, and preferably, disclosed. The recitation of numerical ranges by endpoints includes all numbers and fractions subsumed within the respective ranges, as well as the recited endpoints.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An RFID reader (10) comprising:
- a housing (14);
- an RFID communication circuit (18) accommodated in the housing (14) and configured to perform RFID communications with at least one RFID tag (16) disposed in a read range of the RFID communication circuit (18);
- an image capturing device (20) provided on the housing (14) and configured to capture an image of a machine-readable code (22) disposed in a field of view of the image capturing device (20);
- a controller (24) accommodated in the housing (14); and
- a memory (26) storing at least one configuration program (28) for configuring at least one operating parameter of the RFID reader (10), wherein the controller (24) is configured to:
- decode the machine-readable code (22) captured by the image capturing device (20) to determine the presence or absence of a unique identifier (30) indicating that the machine-readable code (22) includes at least one command (32) for executing the at least one configuration program (28); and
- if the unique identifier (30) is present, extract the at least one command (32) from the decoded machine-readable code (22) and execute the at least one configuration program (28) specified by the at least one command (32) to configure the at least one operating parameter of the RFID reader (10) in accordance with the at least one command (32).

2. The RFID reader of claim 1, wherein the unique identifier (30) includes a predetermined sequence of ASCII characters.

3. The RFID reader of claim 2, wherein the unique identifier (30) includes at least part of a Uniform Resource Identifier, URI.

4. The RFID reader of claim 3, wherein the URI specifies a path that identifies the at least one configuration program (28).

5. The RFID reader of any one of claims 1 to 4, wherein the at least one command (32) is an ASCII command including a name of the at least one configuration program (28) to be executed.

6. The RFID reader of any one of claims 1 to 5, wherein the at least one command (32) includes at least one parameter for the at least one configuration program (28) specifying how to configure the at least one operating parameter.

7. The RFID reader of any one of claims 1 to 6, wherein the machine-readable code (22) includes a plurality of commands (32).

8. The RFID reader of claim 7, wherein the controller (24) is configured to execute the plurality of commands in sequence.

9. The RFID reader of claim 7 or 8, wherein the plurality of commands (32) specifies a plurality of different configuration programs (28) to be executed by the controller (24).

10. The RFID reader of any one of claims 1 to 9, further comprising a communication interface (36) for communicating with an external data processing device (200) using a plurality of different available communication modes, wherein the at least one operating parameter indicates a communication mode to be used for communicating with the external data processing device (200).

11. The RFID reader of claim 10, wherein the communication interface (36) is a wireless communication interface, in particular, Bluetooth.

12. The RFID reader of any one of claims 1 to 11, wherein the at least one configuration program (28) creates or modifies a configuration file stored in the memory (26) and including a plurality of commands to be executed.

13. The RFID reader of claim 12, wherein the plurality of commands is executed when the RFID reader (10) is turned on or reset, or an RFID scan is initiated.

14. The RFID reader of any one of claims 1 to 13, wherein the at least one configuration program (28) configures the RIFD communications performed by the RFID communication circuit (18).

15. The RFID reader of any one of claims 1 to 14, wherein the machine-readable code (22) includes at least one of a QR code, a Micro QR code, PDF417, MicroPDF417, Composite, RSS, TLC-39, Datamatrix, Aztec, or a MaxiCode Postal Code.

16. A method of generating a machine-readable code (22) for configuring an RFID reader (10), the method comprising:
- selecting at least one command (32) for executing at least one configuration program (28) stored in the memory (26) of the RFID reader (10), optionally together with one or more parameters;
- providing a unique identifier (30);
- encoding the unique identifier (30) and the at least one command (32), optionally together with the one or more parameters, in a machine-readable code (22); and
- at least one of: printing the machine-readable code (22), displaying the machine-readable code (22) on a display device, and electronically transmitting the machine-readable code (22) to at least one recipient.
